# EUROPEAN PATENT APPLICATION

(11) **EP 1 239 697 A1**
(43) Date of publication of application: **11.09.2002**
(21) Application number: 01301945.0
(22) Date of filing: 05.03.2001
(51) Int. Cl.: H04Q 11/04, H04M 3/56

(54) **Method of operating a telephone network**

(71) Applicant: LUCENT TECHNOLOGIES INC., Murray Hill, New Jersey 07974-0636 (US)
(72) Inventor: Kroon, Adrianus, 3632 XG Loenen aan de Vecht (NL)
(74) Representative: Buckley, Christopher Simon Thirsk

(57) **Abstract**

A telephone network to provide a broadcast connection between a subscriber line to be broadcast and a plurality of subscriber lines that receive the broadcast. A time switch is used to copy items of data from a first time-slot multiplexed signal, which corresponds to a broadcast source, to a plurality of second time slots in one or more second time-slot multiplexed signals at an output of the time switch, for transmission to subscriber at the destinations of the broadcast.

## Description

### Field of the invention

The invention relates to a method of operating a telephone network to provide a connection between a line that has to be broadcast and a plurality of subscriber lines that have to receive the broadcast. The invention also relates to a time switch for use in such a network.

### Background art

Telephone networks are primarily designed for making point to point connections between subscriber lines. For this purpose, the network contains switches such as time switches and space switches, for interchanging datastreams so as to establish a routing between two subscriber lines. A time switch for example is designed to receive a number of first time-slot multiplexed signals, for example five 2 Megabit per second signals, each containing 32 periodically repeated time-slots, each time slot in each time-slot multiplexed signal containing an input signal from a different subscriber line. This time switch outputs five second time-slot multiplexed signals, in which each time-slot in each time-slot multiplexed signal contains an output signal for transmission to a different subscriber line. The time switch distributes the signals from the time-slots of the first time-slot multiplexed signal over the time-slots of the second time-slot multiplexed signals so as to route the signals to the appropriate subscriber lines.

Telephone networks also provide for conference calls, in which more than two subscriber lines are logically connected to each other. During a conference call, a data-stream transmitted to a specific subscriber line is formed by combining data received from all the other subscriber lines involved in the conference call. A conference call is more expensive than a normal point to point call, because special hardware is needed to form a data-stream for a subscriber line, since this involves retrieving data from more than one subscriber line in order to combine this data into a data-stream for the subscriber line.

An example of a service in which a conference call can be applied is a "church telephone service", in which the sound of a local church service is distributed to a number of parishioners who are unable to attend the local church service in person, for example because of infirmity. This is an example of a service which only requires broadcast support where input from an broadcast subscriber line has to be distributed to more than one receiving subscriber line, but no data has to be passed back to the broadcast subscriber line.

### Summary of the invention

Amongst others, it is an object of the invention to provide for a broadcast service over a telephone network which is less expensive than a conference call service.
It is a further object of the invention to provide for a broadcast service in a telephone network in which no other hardware is needed than for point to point connections.

The invention provides for a method of operating a telephone network to provide a connection between a source line and a plurality of receiving subscriber lines, the method comprising:
- inserting items of data from the source line into a first periodically repeating time slot of a first time-slot multiplexed signal;
- transmitting the first time-slot multiplexed signal to an input of a time switch provided for distributing a content of time-slots in incoming time-slot multiplexed signals over time-slots of a plurality of outgoing time-slot multiplexed signals;
- using the time switch to copy the items of data from the first time-slot multiplexed signal to a plurality of second time slots in one or more second time-slot multiplexed signals at an output of the time switch;
- routing the items of data from the second time slots each to a respective one of the receiving subscriber lines.
By using the method according to the invention it is made possible to provide a broadcast service using the standard hardware capabilities of a time switch. Software modifications suffice to provide a broadcast service. This makes broadcasting very cost effective.
The invention also provides a telephone exchange arranged to support this method and to a computer program for operating this telephone exchange.

### Brief description of the drawing

These and other advantageous aspects of the invention will be described in more detail with reference to the following figures.
- Figure 1: shows a part of a telephone network
- Figure 2: shows a time switch

### Detailed description of an embodiment

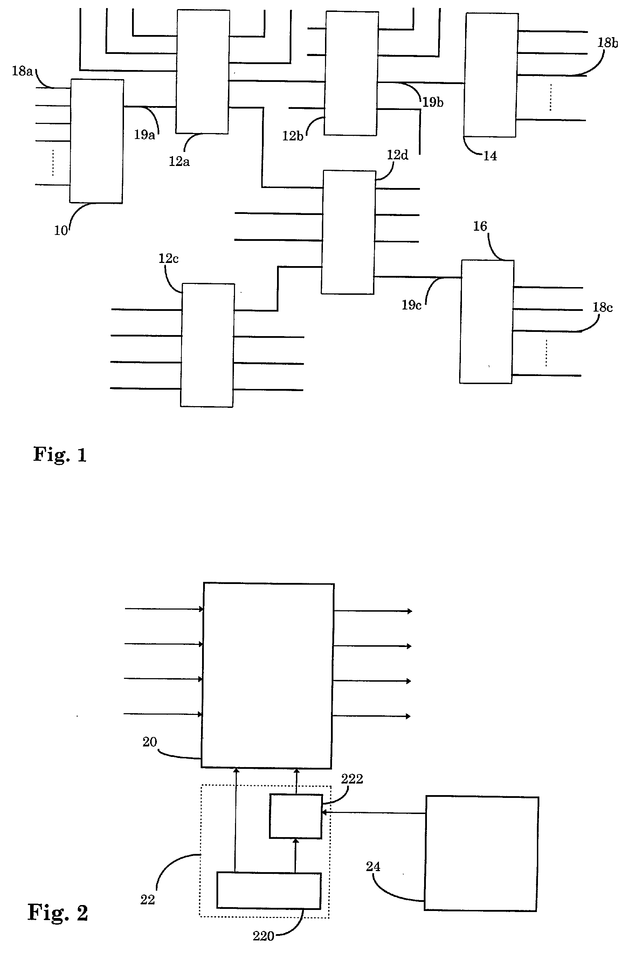

Figure 1 shows a part of a telephone network. Essentially, the function of a telephone network is to setup connections for transmission between selectable pairs of subscriber lines. The connections are realized by paths in a network of nodes. Each node receives and transmits speech and/or digital data for multiple connections. The nodes ensures that the data for each connection is routed to the next node along their specific path.
For this purpose, the network contains a plurality of switches, of which a randomly selected few 12a-d are shown by way of example in figure 1. In addition, figure 1 shows a number of multiplexer/demultiplexers 10, 14, 16. The multiplexer/demultiplexers 10, 14, 16 have a plurality of connections for subscriber lines (e.g. 18a-c) and a connection 19a-c for a time multiplexed signal. Each switch has a number of connections for carrying speech and/or digital data to and from different subscriber lines 18a-c. Examples of switches are space switches and time switches. For the purpose of illustrating the invention only time switches 12a-d are shown. Space switches make interconnections between inputs and outputs, to pass the data-stream from each selected input to a selectable one of the outputs.

A time switch 12a-d has connections for sending an receiving time-slot multiplexed signals. Different time-slots on different incoming connections generally come from different subscriber lines in the network. Different time-slots on different outgoing connections are generally destined to different subscriber lines in the network.

In operation, the multiplexer/demultiplexers 10, 14, 16 take samples of audio signals received from the subscriber lines, or items of digital data received from these subscriber lines (samples or groups of samples and items of digital data will referred to commonly as items of data in the following). A multiplexer/ demultiplexer 10, 14, 16 inserts this item of data in a time-slot multiplexed signal, which is transmitted to a switch. The time-slot multiplexed signal is typically made up of frames of periodically repeating time slots, data from a specific subscriber line being inserted in a specific, periodically repeating time slot. Different periodically repeating time-slots generally contain items of data from different subscriber lines. By way of example, the time-slot multiplexed signal may be a 2 megabit per second signal, carrying data from 32 subscriber lines each with a bit rate of 64 kilobit per second. The time switches 12a-d receive time-slot multiplexed signals from a number of multiplexers or demultiplexers or from other switches 12a-d. Each time switch 12a-d reads items of data from different time-slots in different incoming time-slot multiplexed signals and puts each item of data in a respective selected time slot in a selected outgoing time-slot multiplexed signal. The time switch 12a-d selects of time-slots and outgoing time-slot multiplexed signals as a function of time-slots and the incoming time-slot multiplexed signals dependent on the connection paths that have to be realized through the network.

Figure 2 shows an embodiment of a time switch 12a-d. The time switch contains a multi-port port memory 20 and a controller 22 coupled to the multi-port memory 20. The controller 22 contains a control circuit 220 and an address memory 222, the control circuit 220 is coupled to the memory 20 directly and via address memory 222. Figure 2 also shows a controlling computer 24, which controls controller 22. Generally, a controlling computer 24 controls a number of switches that are present together in a telephone exchange. The memory 20 has input ports for receiving data from a number of first time-slot multiplexed signals and output ports for transmitting data of a number of second time-slot multiplexed signal. (The memory 20 may be a true multi-port memory or multi-port behavior may be realized by time-slot multiplexing access to the memory from different ports).

In operation, controller 22 supplies first addresses to memory 20, for addressing the locations in which items of data from different incoming time-slot multiplexed signals at different input ports have to be stored in memory 20. Similarly, controller supplies second addresses to memory 20, for addressing the locations from which items of data from different outgoing time-slot multiplexed signals at different output ports have to be read from memory 20. By way of example, the first addresses have a fixed relation to the time-slots and the input ports and the second addresses depends on the connections that have to be realized by the switch. For this purpose, control circuit 220 directly supplies the first addresses to memory 20. The pattern of addresses repeats itself after each frame of periodically repeating time-slots. Address memory 222 stores the addresses that have to be used for different time-slots for different output ports at addresses in address memory 222 that are themselves addressed with addresses that have a fixed relation to the time-slots and the output ports. The controlling computer 24 writes the addresses into address memory 222 dependent on the connections that have to be realized by the network, once a connection is established and removes addresses when the connection is disconnected.

Control circuit 220 causes address memory 222 to supply the addresses required for each output port and time slot to memory 20. For this purpose, control circuit 220 indicates the relevant output port and time-slot to address memory 222, which thereupon outputs the address in memory 20 to be used for that output port and time-slot. The pattern of addresses repeats itself after each frame of periodically repeating time-slots.

Thus, it is ensured that each item of data that is received at the input ports is routed to the appropriate time-slot in the appropriate output port, so as to route data items from a source line to an appropriate receiving subscriber line. Generally an exchange contains multiples switches, including a switch to route data items in the opposite way, from the receiving subscriber line to the source line.

In normal point to point operation a time-switch transfers data items from each time-slot in each incoming time-slot multiplexed signal to a selected single time-slot in a single outgoing time-slot multiplexed signal, or to no time-slot at all.

According to the invention, a broadcast service is provided in which the telephone network routes items of data from a source line to a plurality of receiving subscriber lines, generally without routing back data items from the receiving subscriber lines to the source line.

According to the invention at least one of the time-switches 12a-d is used to copy data items from a first periodically repeating time-slot in a first incoming time-slot multiplexed signal to a plurality of periodically repeating time-slots in different outgoing time-slot multiplexed signals and/or different periodically repeating time-slots in the same outgoing time-slot multiplexed signal. Each of this plurality of periodically repeating time-slots is destined to a different subscriber line.

For this purpose, the controlling computer 24 writes the same address (corresponding to first incoming time-slot that is to be copied to the plurality of time-slots) in the entries for the different time-slots and/or outgoing time-slot multiplexed signals of the plurality. This can be realized by a suitable program executed by the controlling computer 24. This program contains instructions that determine the memory address of the location where items of data from the first time-slot are written into memory 20, and copies this memory address into a number of locations in address memory 222, corresponding to subscriber lines to which the items of data items must be routed. No hardware changes to the controlling computer or the switch are needed.
The controlling computer does not write addresses for a corresponding connection in the opposite direction from the receiving subscriber lines to the source line. Such a connection is not possible without additional hardware since it would require consulting multiple addresses in memory 20 to read items of data and combining these items into data for the source line.
However, no such connection in the opposite direction is needed in the case of a broadcast service.

It will be appreciated that the embodiment shown in this description is only an example of how a time-switch can be used to copy items of data from a single subscriber line into a plurality of time-slots. Other implementations are possible, depending, amongst others, on the specific architecture of the time switch.

Various procedures may be used to establish broadcast connections. In a first procedure, the telephone network for example establishes a connection number for the source 18a of the data items (e.g. the connection number of the subscriber line that produces the data items, but the network operator may also establish a special connection number for broadcasts from this source) when a broadcast service is requested, for example by a church that wants to broadcast its service.

The broadcast data may be fed into the telephone network via a dial-in subscriber line 18a or a fixed line 18a.
Each subscriber that wants to receive items of data from the source dials the connection number from his or her subscriber line 18b,c. The network detects that a connection number is dialed which requires broadcast service, for example from a database of service information for the connection number. In response to dialing, the network instructs a controlling computer of one or more exchanges to establish a network connection. For the first receiving subscriber line 18b that dials into the connection number, this connection differs very little from ordinary point to point connections, except that optionally no connection for transmission of items of data from the dialer to the broadcast source 18a is established; also no ringing tone is needed. In an embodiment which uses a fixed line 18a to the network for the broadcast source, data from the broadcast source need not be entered into the network before such a first subscriber line 18a dials in.

For each subsequent subscriber line 18c that dials in to the connection number, a controlling computer 24 is instructed to configure the time-switch (e.g. time switch 12a for subscriber lines 18b,c) so that items of data are copied to an additional time-slot in a time-slot multiplexed signal that is routed to the subsequent subscriber line 18c. Clearly, it is not necessary that items of data are copied to time-slots for all destinations in a single time-switch: copying may occur in any number of time-switches, preferably each time in a final time-switch 12a before the connections to a pair of subscriber lines 18b,c splits into physically separate lines. However, in case of church services many subscribers that connect to the service will often be connected to the same time switch 12a.
In the case that the broadcast source has a dial-in line 18a the broadcaster dials in when the broadcast may start, for example to a special number for signaling the start of the broadcast. This may be for example the number that the receiving subscriber lines 18b,c dial into to receive the broadcast, or some special service number for requesting a broadcast service. This dial in by the broadcast source signals the start of the broadcast to the network. In response the network feeds data to some starting time-switch 12a. Subsequenty, if subscriber lines 18b,c dial into the service, data from this node is copied. Of course, the invention is not limited to broadcasting of church services, or indeed to any specific subscriber line 18a. For example, any subscriber line 18a may be allowed to dial-in to a predefined service number for starting a broadcast. In response, data from this broadcasting subscriber line 18a is fed to a node in the network and when receiving subscriber lines 18b,c dial the number of the broadcasting subscriber line 18a, they are connected as described hereinbefore. The network may send back information about the number of active receiving subscriber lines 18b,c listening to the broadcast. This allows the broadcasting subscriber line to hang-up when no-one listens for some time. When the broadcasting subscriber line 18a hangs up, the receiving subscriber lines 18b,c, if any, are disconnected.

In an embodiment, the broadcasting subscriber line 18a may signal the telephone numbers of the receiving subscriber lines 18b,c that are allowed to connect to the broadcast service. In a further embodiment, connections to these receiving subscriber lines 18b,c dialed on command by the broadcasting subscriber line 18a.

The telephone network can bill the broadcast service in various ways. For example, bills may be charged against the receiving subscriber lines 18b,c for the duration that they dial into the broadcast service. This allows for accurately controllable costs for all users. Especially in the case of a fixed line 18a from the broadcast source, when no transport costs have to be made when no receiving subscriber lines 18b,c dial in.

Alternatively, or in combination, the broadcasting subscriber line 18a may becharged for the duration that receiving subscriber lines 18b,c are connected. This is useful for example for commercial broadcasts, where the broadcast source desires to stimulate listening by reducing costs for the listeners. As an alternative, the broadcast source might be billed only for local or regional calls, excess costs being charged to the receiving subscriber lines 18b,c.

## Claims

1. A method of operating a telephone network to provide a connection between a source line and a plurality of receiving subscriber lines, the method comprising:
- inserting items of data from the source line into a first periodically repeating time slot of a first time-slot multiplexed signal;
- transmitting the first time-slot multiplexed signal to an input of a time switch provided for distributing a content of time-slots in incoming time-slot multiplexed signals over time-slots of a plurality of outgoing time-slot multiplexed signals;
- using the time switch to copy the items of data from the first time-slot multiplexed signal to a plurality of second time slots in one or more second time-slot multiplexed signals at an output of the time switch;
- routing the items of data from the second time slots each to a respective one of the receiving subscriber lines.

2. A method according to Claim 1, the time-switch comprising a memory for storing the content of the time slots in the time-slot multiplexed signals, and an address memory for providing the addresses from which items of data for different time-slots in different time-slot multiplexed signals are to be read for the outgoing time-slot multiplexed signals, the method comprising writing a same address into more than one location in the address memory, the more than one locations corresponding to plurality of second time slots in one or more second time-slot multiplexed signals.

3. A method according to Claim 1, comprising associating a first extension number with the source line and arranging that the items of data are subsequently copied to second time slots for an additional subscriber line, when the additional subscriber line dials in to the first extension number.

4. A method according to Claim 1, wherein the network establishes respective connections between the time-switch and the receiving subscriber lines in response to dialing in from the receiving subscriber lines.

5. A method according to Claim 4, the network signaling a number of connected receiving subscriber lines to the source line.

6. A method according to Claim 4, wherein at least a regional part of transport costs for connecting the receiving subscriber line is charged against the source line.

7. A method according to Claim 4, in which all the connections are broken off when the broadcasting subscriber line hangs up.

8. A method according to Claim 1, wherein the source line is a broadcasting subscriber line, the method comprising receiving, with the network, a call from the broadcasting subscriber line to start transmission, the network establishing connections to a specified set of receiving subscriber lines in response to said call.

9. A method according to Claim 8, in which all the connections are broken off when the broadcasting subscriber line hangs up.

10. A method according to Claim 8, wherein the specified set is signaled from the broadcasting subscriber line.

11. A telephone exchange with a time switch and a controlling computer, the controlling computer being programmed to configure the time switch so as to copy items of data from a first periodically repeating time-slot in a first time-slot multiplexed signal to a plurality of periodically repeating second time slots in one or more second time-slot multiplexed signals at an output of the time switch.

12. A telephone exchange according to Claim 11, the time-switch comprising a content memory for storing the content of the time slots in the time-slot multiplexed signals, and an address memory for providing the addresses from which items of data for different time-slots in different time-slot multiplexed signals are to be read from the content memory for the outgoing time-slot multiplexed signals, the controlling computer being programmed to write a same address into more than one location in the address memory, the more than one locations corresponding to plurality of second time slots in one or more second time-slot multiplexed signals.

13. A computer program product for execution in a controlling computer of a telephone exchange, the computer program product being arranged to cause the controlling computer to configure a time switch so as to copy items of data from a first periodically repeating time-slot in a first time-slot multiplexed signal to a plurality of periodically repeating second time slots in one or more second time-slot multiplexed signals at an output of the time switch.

14. A computer program product according to Claim 13, the time-switch comprising a content memory for storing the content of the time slots in the time-slot multiplexed signals, and an address memory for providing the addresses from which items of data for different time-slots in different time-slot multiplexed signals are to be read from the content memory for the outgoing time-slot multiplexed signals, the computer program product being arranged to cause the controlling computer to write a same address into more than one location in the address memory, the more than one locations corresponding to plurality of second time slots in one or more second time-slot multiplexed signals.

15. A time switch used in a telephone network, the time-switch comprising a content memory for storing the content of the time slots in the time-slot multiplexed signals, and an address memory for providing the addresses from which items of data for different time-slots in different time-slot multiplexed signals are to be read for the outgoing time-slot multiplexed signals, more than one location in the address memory containing a same address of a location in the content memory where items of data from a broadcasting line are stored, the more than one locations corresponding to plurality of second time slots in one or more second time-slot multiplexed signals.
